# EUROPEAN PATENT SPECIFICATION

(11) **EP 4 488 166 B1**
(45) Date of publication and mention of the grant of the patent: **02.09.2026**
(21) Application number: 23183400.3
(22) Date of filing: 04.07.2023
(51) Int. Cl.: B64C 1/06, B64C 1/20

(54) **SUPPORT STRUCTURE FOR ABSORBING A CRASH KINETIC ENERGY AS WELL AS AIRCRAFT OR SPACECRAFT**
TRAGSTRUKTUR ZUR AUFNAHME KINETISCHER AUFPRALLENERGIE SOWIE LUFT- ODER RAUMFAHRZEUG
STRUCTURE DE SUPPORT POUR ABSORBER UNE ÉNERGIE CINÉTIQUE DE COLLISION AINSI QU'AÉRONEF OU ENGIN SPATIAL

(43) Date of publication of application: 08.01.2025
(73) Proprietor: Airbus Operations GmbH, 21129 Hamburg (DE)
(72) Inventor: Werthmann, Vitalij, 21129 Hamburg (DE)
(74) Representative: Isarpatent

(56) References cited:
- US-A1- 2009 206 202
- US-A1- 2020 223 529
- US-A1- 2022 380 018
- XIANFEI ZHU ET AL: "Evaluate the crashworthiness response of an aircraft fuselage section with luggage contained in the cargo hold", INTERNATIONAL JOURNAL OF CRASHWORTHINESS, vol. 22, no. 4, 4 April 2017 (2017-04-04), pages 347 - 364, XP093104576, ISSN: 1358-8265, DOI: 10.1080/13588265.2016.1258957

## Description

The invention relates to a support structure for absorbing a crash kinetic energy. More specifically, the invention relates to a support structure for absorbing a crash kinetic energy having a combined velocity vector affecting an aircraft fuselage. The invention is furthermore concerned with an aircraft or spacecraft containing an aircraft fuselage with such a support structure.

An important task of a lower deck of an aircraft is to provide a crumple zone for the upper deck for the situation of a crash of the underside of the aircraft fuselage. For this situation, the lower deck has support devices, which are known in the prior art and which are designed or configured to absorb a part of the kinetic energy of the underside of the aircraft fuselage and to convert the kinetic energy by plastic deformation, for example. As a result of the deformation of the support devices and of the fuselage structure in the lower region of the aircraft fuselage, the acceleration forces that are exerted on the passengers in the upper deck as a result of the crash because of the abrupt decrease in speed are considerably reduced. In this way, physical injury to the passengers is minimized.

Typical crash concepts of aircraft fuselage are based on circumferential stiffeners, like frames, cargo cross beam and struts, and the physical capability of these elements to absorb the crash energy.

For example, document DE 10 2007 030 026 A1 describes a structural component for an aircraft fuselage that combines a frame element with a cargo-hold transverse member, wherein the transverse member has greater stiffness than the frame element. In this arrangement the frame element is used to reinforce the outer skin and is curved in an arc-shaped manner corresponding to an inner contour of the outer skin. The transverse member element transversely interconnects two arc portions of the frame element and absorbs mechanical loads on the structure to a greater extent than do said arc portions.

Document US 2009/206202 A1 describes an energy absorbing structural member comprising an elongated body having first and second opposite ends, and first and second opposite sides, the body containing laminated plies of reinforced composite material, the plies having varying lengths forming steps along the length of the member such that the compression strength of the member is progressively less from the first end to the second end; and, at least a first reinforcing flange extending from the main body along the first side, the first flange tapering in width from the first end of the body to the second end of the body. The cargo area includes a plurality of transversely extending floor beams connected at their outer ends to a curved fuselage frame, and supported by a plurality of stanchions.

Further, document US 2020/223529 A1 describes an aircraft cargo floor architecture comprising a plurality of aircraft keel frames, wherein one or more longitudinal rails are attached directly to the aircraft keel frames.

In document US 2022/380018 A1 an aircraft fuselage assembly extending along a longitudinal axis is described. Second cargo floor elements arranged successively, as seen along the longitudinal axis, extend between the second beam at the free ends of the support elements of the second row and the lateral region of the primary structure in the form of the formers.

Moreover, document XIANFEI ZHU ET AL: "Evaluate the crashworthiness response of an aircraft fuselage section with luggage contained in the cargo hold", INTERNATIONAL JOURNAL OF CRASHWORTHINESS, vol. 22, no. 4, 4 April 2017 (2017-04-04), pages 347-364, XP0931 04576, ISSN: 1358-8265, DOl: 10.1080/13588265.2016.1258957, describes a cargo floor assembly consisted of several substructures which includes cargo floor, cargo floor beam, cargo floor stanchion, and cargo track.

Aspects of the invention may provide solutions for a support structure that provides a well crash energy absorption for multiple different crash events. According to the invention, this problem is solved in each case by the subject matters of the independent claim.

According to a first aspect of the invention, a support structure for absorbing a crash kinetic energy is provided. In particular, a support structure for absorbing a crash kinetic energy having a combined velocity vector affecting an aircraft fuselage is provided. The support structure comprises a plurality of frames, which extend parallel to one another, and a plurality of reinforcing frame elements mounted at least sectionwise on each frame of the plurality of frames and configured to reinforce the plurality of frames. The support structure further comprises a longitudinal beam device for absorbing a crash kinetic energy vector component in a longitudinal direction, wherein the longitudinal beam device extends in the longitudinal direction basically perpendicular to the plurality of frames. The longitudinal beam device is mounted on the plurality of reinforcing frame elements.

According to a second aspect of the invention, an aircraft or spacecraft is provided. The aircraft or spacecraft comprises an aircraft fuselage having a support structure according to the invention.

A fundamental concept of the invention is to provide the longitudinal beam device (or: longitudinal structure) instead of circumferential structure elements for absorbing a crash kinetic energy. Additionally to conventional known solutions which only consider the z-velocity component of the crash kinetic energy, the support structure or primary structure according to the present invention can sustain a combined velocity vector including a X-vector component and a Z-vector component. By reinforcing the lower part, in particular the middle lower part, of the frames and installing of the longitudinal beam device, crash loads can be controlled redirected into the longitudinal direction. Conventional cargo cross beams or transverses can be omitted in the present solution.

A term basically perpendicular in the meaning of this application means an angle between two directions or orientations to be 90° with a tolerance of 10°. For example, the longitudinal direction having an angle in the range of 80° to 100° is basically perpendicular to the plurality of frames according to the meaning of the present invention.

A particular advantage in the solution according to an aspect of the invention is that by providing the longitudinal beam device and reinforcing the existing frames by means of the plurality of reinforcing frame elements a load path having a X-vector component and a Z-vector component may be created. Furthermore, the support structure or parts of it can be installed in the lower part on a late stage of assembly. Advantageously, the support structure and the lower part of the aircraft fuselage, respectively, absorbs the crash kinetic energy and can improve survival of passengers.

Advantageous embodiments and further developments emerge from the description with reference to the figures.

According to some aspects of the support structure according to the invention, the support structure further comprises a shear plate for absorbing a crash kinetic energy vector component in the longitudinal direction positioned between and connected to two of the plurality of frames. Hence, the stiffness of the support structure is increased. The shear plate can be mounted to the two frames by means of a rivet joint or of a bolt connection. Alternatively, the shear plate can be firmly bonded to the two frames, for example by welding or adhesive bonding. Furthermore, the shear plate may comprise a recess for reducing a weight of the shear plate. The shear plate can be made of the same material as the plurality of frames or the plurality of reinforcing frame elements. For example, the shear plate can comprise aluminum, titanium, a fiber-reinforced material or a similar compound. The shear plate can further be reinforced.

According to some further aspects of the support structure according to the invention, the longitudinal beam device is mounted on the plurality of reinforcing frame elements by means of a rivet joint or of a bolt connection. Alternatively, the longitudinal beam device can be firmly bonded to the plurality of reinforcing frame elements, for example by welding or adhesive bonding.

The longitudinal beam device can be made of the same material as the plurality of frames or the plurality of reinforcing frame elements. For example, the longitudinal beam device can comprise aluminum, titanium, a fiber-reinforced material or a similar compound.

According to some further aspects of the support structure according to the invention, the longitudinal beam device is configured to slidably carry a cargo. Thus, the longitudinal beam device can provide two functions which may reduce additional components. Therefore, a weight and/or package of an aircraft can be improved. Optionally, the longitudinal beam device can comprise or be coupled to rollers over which the cargo can slide.

According to some further aspects of the support structure according to the invention, the longitudinal beam device comprises at least two longitudinal rails spaced apart from one another for guidedly handling a cargo. In other words, the at least two longitudinal rails for cargo can be integrated in or attached to the longitudinal beam device. Thus, the cargo can be fixed to the at least two longitudinal rails.

According to the invention, each of the plurality of reinforcing frame elements has a protrusion which protrudes basically perpendicular to the longitudinal direction. In an aircraft, the plurality of frames are configured in a circumferential direction. Hence, the protrusion may basically protrude towards a center of the circumferentially configured frames, that means towards the inside of the aircraft.

A number of the reinforcing frame elements can correspond to a number of the frames, for example.

According to the invention, the longitudinal beam device is mounted on the protrusions of the plurality of reinforcing frame elements. For example, the protrusion can be configured as a hump on which top the longitudinal beam device is attached to.

According to the invention, the longitudinal beam device is part of a plate structure that hermetically encloses a cargo compartment such that a cargo is slidable on the longitudinal beam device inside the cargo compartment.

According to some further aspects of the support structure according to the invention, the plurality of reinforcing frame elements are mounted on the plurality of frames by means of a rivet joint or of a bolt connection. Alternatively, the plurality of reinforcing frame elements can be firmly bonded to the plurality of frames, for example by welding or adhesive bonding.

According to some further aspects of the support structure according to the invention, a shape of the plurality of reinforcing frame elements at least partly basically corresponds to a contour of a cross-section of the plurality of frames. That means, the plurality of reinforcing frame elements have a mutually adapted shape as the surface of the plurality of frames. For example, when the plurality of frames has a rectangular cross-sectional shape the plurality of reinforcing frame elements could be formed as a U-profile to be put on the rectangular cross-sectional shape of the plurality of frames.

According to some further aspects of the support structure according to the invention, the plurality of reinforcing frame elements is configured as a frame covering layer that covers the plurality of frames sectionwise. The frame covering layer may surround the contour of the cross-section of the plurality of frames or cover at least half of the contour of the cross-section of the plurality of frames. For example, the plurality of reinforcing frame elements can be configured and attached like patches or similar.

According to some further aspects of the support structure according to the invention, the support structure further comprises at least one reinforced stringer extending in the longitudinal direction and fixed to the plurality of frames. Hence, at least one of the existing stringers of an aircraft fuselage can be reinforced. For example, the support structure can comprise at least one reinforced stringer out of a group of a plurality of typical stringers. Preferably, the at least one reinforced stringer is the stringer of the plurality of typical stringers which is the closest to the longitudinal beam device. By reinforcing the at least one stringer, a crash load can be controlled redirected into the longitudinal direction.

According to some further aspects of the support structure according to the invention, the at least one stringer is in contact with the shear plate at least sectionwise for supporting the shear plate. Thus, the reinforced stringer can carry a load from the shear plate. Therefore, the at least one stringer is in particular reinforced at an area where it is in contact with the shear plate.

According to some aspects of the aircraft or spacecraft according to the invention, the plurality of reinforcing frame elements are positioned in a bilge area, also called a lower part, of the aircraft fuselage. Accordingly, the longitudinal beam device and reinforced longitudinal structure, respectively, can be installed in the lower part of the aircraft fuselage. Thus, the longitudinal beam device can be mounted by friction stir welding.

The present invention is explained more specifically below on the basis of the exemplary embodiments indicated in the schematic figures, in which:
- Fig. 1: shows a schematic perspective view of a support structure for absorbing a crash kinetic energy according to an embodiment of the invention;
- Fig. 2: shows a schematic illustration of a sectional side view of a support structure for absorbing a crash kinetic energy according to a further embodiment of the invention;
- Fig. 3: shows a schematic illustration of an aircraft according to a further embodiment of the invention;
- Fig. 4: shows a schematic illustration of a section view A-A of the support structure of Fig. 1 in a bilge area of an aircraft fuselage.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

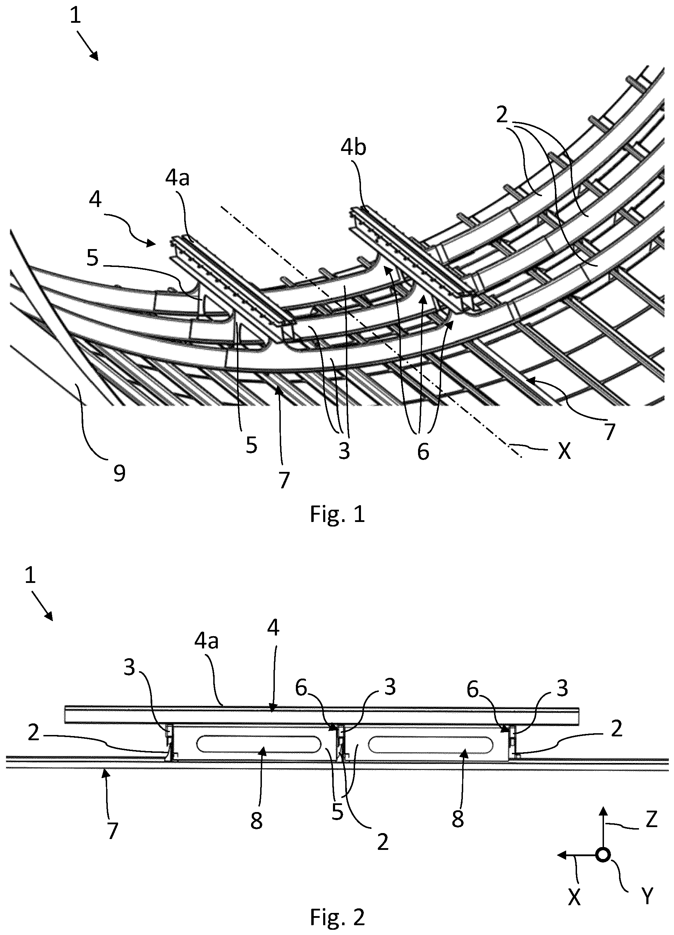

Fig. 1 shows a schematic perspective view of a support structure 1 for absorbing a crash kinetic energy. More specifically, a support structure 1 for an aircraft fuselage is shown.

The support structure 1 comprises a plurality of frames 2, a plurality of reinforcing frame elements 3, a longitudinal beam device 4 and shear plates 5. The support structure 1 is configured for absorbing a crash kinetic energy having a combined velocity vector affecting the aircraft fuselage.

In Fig. 1 only three frames 2 are illustrated, but the support structure 1 is not limited to such a number of frames 2. The support structure 1 may comprise any number of frames 2. The plurality of frames 2, here the three exemplary frames 2, extend parallel to one another.

The plurality of reinforcing frame elements 3, here the three reinforcing frame elements 3, are mounted at least sectionwise on each frame 2 and configured to reinforce the frames 2. Each reinforcing frame element 3 is mounted on the frame 2 by means of a rivet joint, of a bolt connection or similar fastening means. Furthermore, each of the three reinforcing frame elements 3 has two protrusions 6 which protrude basically perpendicular to a longitudinal direction X. Exemplarily, the reinforcing frame elements 3 are configured as a frame covering layer that covers the frames 2 sectionwise, in particular in a lower part of the aircraft fuselage, as it is illustrated in Fig. 1.

The longitudinal beam device 4 is used for absorbing a crash kinetic energy vector component in the longitudinal direction X, in particular in addition to a crash kinetic energy vector component in a vertical direction Z. The longitudinal beam device 4 extends in the longitudinal direction X basically perpendicular to the three parallel frames 2. Furthermore, the longitudinal beam device 4 is mounted on the three reinforcing frame elements 3. For example, the longitudinal beam device 4 comprises two longitudinal rails 4a, 4b spaced apart from one another for guidedly handling a cargo. However, the number of longitudinal rails 4a, 4b is not limited to this example.

The exemplarily illustrated two longitudinal rails 4a, 4b are mounted on the three reinforcing frame elements 3, in particular on the protrusions 6 of the three reinforcing frame elements 3, by means of a rivet joint or of a bolt connection. In some examples, the exemplarily illustrated two longitudinal rails 4a, 4b can be firmly bonded to the three reinforcing frame elements 3, for example by welding or adhesive bonding. The longitudinal beam device 4 with its two longitudinal rails 4a, 4b is configured to slidably carry a cargo.

In this example, the support structure 1 comprises four shear plates 5 for absorbing a crash kinetic energy vector component in the longitudinal direction X. Each of the four shear plates 5 is positioned between and connected to two of the three frames 2.

The reinforcing frame elements 3, the longitudinal beam device 4 and the shear plates 5 are configured to, in a crash event, form a load path that is able to sustain a crash kinetic energy vector component in at least two directions, in particular in the longitudinal direction and the vertical direction Z, corresponding to the Z-vector component as it is illustrated in Fig. 2.

Further, the support structure 1 comprises two reinforced stringers 7 extending in the longitudinal direction X and fixed to the plurality of frames 2. For example, the two reinforced stringers 7 are in contact with the corresponding shear plate 5 at least sectionwise for supporting the shear plate 5.

Optionally, the reinforced stringer 7 can be attached to an outer skin 9.

Fig. 2 shows a schematic illustration of a sectional side view of a support structure 1 for absorbing a crash kinetic energy. The support structure 1 of Fig. 2 basically comprises the same features as the support structure 1 of Fig. 1.

Additionally, a shape of the reinforcing frame elements 3 at least partly basically corresponds to a contour of a cross-section of the frames 2. Here, the contour of the cross-section is rectangular, in particular with rounded corners. Thus, the shape of the reinforcing frame elements 3 may also be rectangular in a contact zone to the frame 2.

Optionally, the shear plates 5 comprise a recess 8 for reducing a weight of the shear plate 5. For example, the shear plates 5 have a rectangular shape with an oval or rectangular recess 8. As it is indicated in Fig. 2, the shear plate 5 is not in contact with the longitudinal beam device 4.

For example, the longitudinal beam device 4 forms a bridge from frame 2 to frame 2. Thereby, the reinforced stringer 7 is positioned on the opposite side of the frames 2 with regard to the longitudinal beam device 4. Moreover, the shear plate 5 is positioned between the longitudinal rail 4a and the reinforced stringer 7.

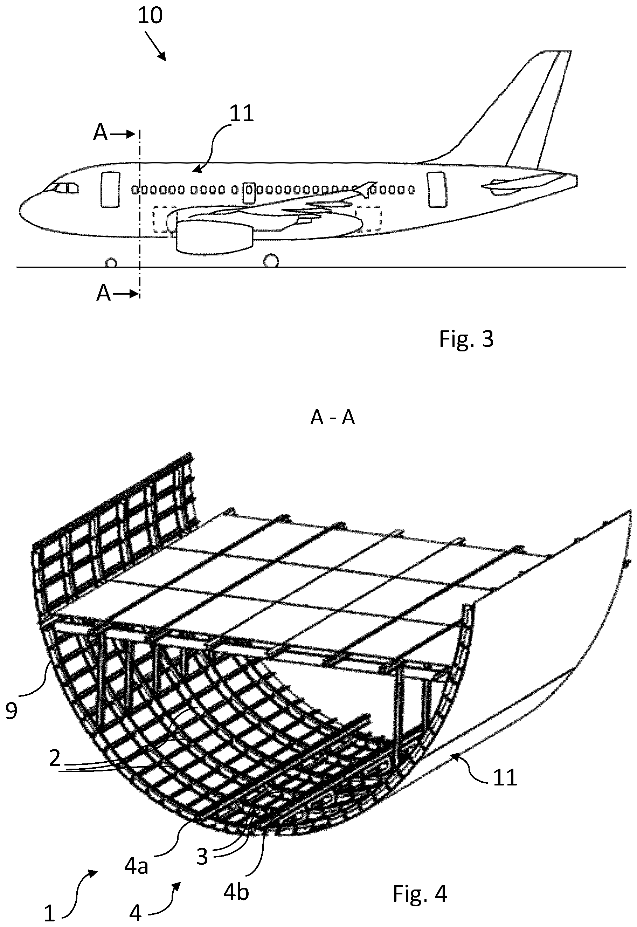

Fig. 3 and 4 show a schematic illustration of an aircraft 10, wherein Fig. 4 specifically shows a section view A-A of the support structure 1 of Fig. 1 in a bilge area of an aircraft fuselage 11.

The aircraft 10 comprises an aircraft fuselage 11 having a support structure 1 of Fig. 1 or 2, for example. The plurality of reinforcing frame elements 3 of the support structure 1 are positioned in the bilge area and lower part, respectively, of the aircraft fuselage 11.

Furthermore, the support structure 1 and the aircraft fuselage 11, respectively, may have a section which is designed for absorbing energy. Such a section may also be referred to as predetermined buckling line. The section may, for example, extend along a line running parallel to the longitudinal direction of the support structure 1. However, other profiles of the section are also conceivable. It is also conceivable for such a section to be arranged on both sides of the aircraft fuselage 11 in the lower deck, that is to say on a left-hand side and a right-hand side of the lower deck. This arrangement may, for example, be symmetrical with respect to a plane spanned by the longitudinal direction of the support structure and of a line running perpendicular to the intermediate floor and through the longitudinal direction. It is also conceivable for more than one predetermined buckling line to be arranged on each side of the support structure. Finally, it is conceivable for the predetermined buckling line to be of areal form with an extent in a circumferential direction and an extent in the longitudinal direction.

The aircraft fuselage 11 may have the form of a tube, though may also be a passenger region of a flying-wing aircraft. A flying-wing aircraft is an aircraft without a separately projecting elevator unit, vertical stabilizing fins or a rudder unit. The tubular aircraft fuselage may have, or be formed from, transverse and longitudinal stiffening elements. Both the transverse and the longitudinal stiffening elements increase the stability and stiffness of the aircraft fuselage. Transverse stiffening elements may be ribs which are arranged substantially in a circumferential direction of the tubular aircraft fuselage. Longitudinal stiffening elements may be so-called stringers, which are arranged substantially along an axis perpendicular to the circumferential direction, that is to say a central longitudinal direction X (also referred to as central axis) of the aircraft fuselage. Longitudinal stiffening elements may also be the longitudinal beam device 4. The aircraft fuselage may furthermore have an outer skin which spatially divides an interior compartment of the aircraft fuselage, that is to say a cabin interior compartment, from the external surroundings of the aircraft fuselage.

Furthermore, the aircraft fuselage 11 has an intermediate floor, also referred to as cabin floor. This intermediate floor can extend horizontally through the interior compartment of the aircraft fuselage and can divide the interior compartment of the cabin, preferably at least in sections, into an upper deck and a lower deck. The upper deck is in this case preferably arranged above the lower deck. The intermediate floor can be furthermore fastened to the aircraft fuselage, that is to say, for example, to the longitudinal and/or transverse stiffening elements. The upper deck may in this case be designed as a cabin with seats for passengers. The lower deck may be configured as a freight compartment (or: cargo compartment) for transporting luggage belonging to the passengers and/or goods.

In the detailed description above, various features have been combined in one or more examples in order to improve the rigorousness of the illustration. However, it should be clear in this case that the above description is of merely illustrative but in no way restrictive nature. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications may be apparent to one of ordinary skill in the art and can be made without departing from the scope of the claims. In addition, in this disclosure, the terms "comprise" or "comprising" do not exclude other elements or steps, and the terms "a" or "one" do not exclude a plural number. Furthermore, characteristics or steps which have been described may also be used in combination with other characteristics or steps and in any order unless the disclosure or context suggests otherwise.

### Reference list

- 1: support structure
- 2: plurality of frames
- 3: plurality of reinforcing frame elements
- 4: longitudinal beam device
- 4a, 4b: longitudinal rails
- 5: shear plate
- 6: protrusion
- 7: reinforced stringer
- 8: recess
- 9: outer skin
- 10: aircraft
- 11: aircraft fuselage

- X: longitudinal direction
- Z: vertical direction

## Claims

1. Support structure (1) for absorbing a crash kinetic energy, in particular for absorbing a crash kinetic energy having a combined velocity vector affecting an aircraft fuselage, the support structure (1) comprising:
a plurality of frames (2), which extend parallel to one another;
a plurality of reinforcing frame elements (3) mounted at least sectionwise on each frame of the plurality of frames (2) and configured to reinforce the plurality of frames (2); and
a longitudinal beam device (4) for absorbing a crash kinetic energy vector component in a longitudinal direction (X), wherein the longitudinal beam device (4) extends in the longitudinal direction (X) having an angle in the range of 80° to 100° to the plurality of frames (2), and is mounted on the plurality of reinforcing frame elements (3), wherein the longitudinal beam device (4) is configured to be part of a plate structure that hermetically encloses a cargo compartment such that a cargo is slidable on the longitudinal beam device (4) inside the cargo compartment, and
**characterised in that**
each of the plurality of reinforcing frame elements (3) has a protrusion (6) which protrudes with an angle of 90° with a tolerance of 10° to the longitudinal direction (X), wherein the longitudinal beam device (4) is mounted on the protrusions (6) of the plurality of reinforcing frame elements (3).

2. Support structure (1) according to claim 1, further comprising a shear plate (5) for absorbing a crash kinetic energy vector component in the longitudinal direction (X) positioned between and connected to two of the plurality of frames (2).

3. Support structure (1) according to claim 1 or 2, wherein the longitudinal beam device (4) is mounted on the plurality of reinforcing frame elements (3) by means of a rivet joint or of a bolt connection.

4. Support structure (1) according to one of the preceding claims, wherein the longitudinal beam device (4) is configured to slidably carry a cargo.

5. Support structure (1) according to one of the preceding claims, wherein the longitudinal beam device (4) comprises at least two longitudinal rails (4a, 4b) spaced apart from one another for guidedly handling a cargo.

6. Support structure (1) according to one of the preceding claims, wherein the plurality of reinforcing frame elements (3) are mounted on the plurality of frames (2) by means of a rivet joint or of a bolt connection.

7. Support structure (1) according to one of the preceding claims, wherein a shape of the plurality of reinforcing frame elements (3) at least partly corresponds to a contour of a cross-section of the plurality of frames (2).

8. Support structure (1) according to one of the preceding claims, wherein the plurality of reinforcing frame elements (3) is configured as a frame covering layer that covers the plurality of frames (2) sectionwise.

9. Support structure (1) according to one of the preceding claims, further comprising at least one reinforced stringer (7) extending in the longitudinal direction (X) and fixed to the plurality of frames (2).

10. Support structure (1) according to claim 2 and 9, wherein the at least one reinforced stringer (7) is in contact with the shear plate (5) at least sectionwise for supporting the shear plate (5).

11. Aircraft (10) comprising an aircraft fuselage (11) having a support structure (1) according to one of the preceding claims.

12. Aircraft (10) according to claim 11, wherein the plurality of reinforcing frame elements (3) are positioned in a bilge area of the aircraft fuselage (11).

## Patentansprüche

1. Stützstruktur (1) zur Absorption von kinetischer Aufprallenergie, insbesondere zur Absorption von kinetischer Aufprallenergie mit einem kombinierten Geschwindigkeitsvektor, der auf einen Flugzeugrumpf einwirkt, wobei die Stützstruktur (1) umfasst:
eine Vielzahl von Rahmen (2), die sich parallel zueinander erstrecken;
eine Vielzahl von Verstärkungsrahmenelementen (3), die zumindest abschnittsweise an jedem Rahmen der Vielzahl von Rahmen (2) angebracht und zur Verstärkung der Vielzahl von Rahmen (2) ausgelegt sind; und
eine Längsträgervorrichtung (4) zur Absorption einer in einer Längsrichtung (X) verlaufenden Vektorkomponente der kinetischen Aufprallenergie, wobei sich die Längsträgervorrichtung (4) in der Längsrichtung (X) in einem Winkel im Bereich von 80° bis 100° zu der Vielzahl von Rahmen (2) erstreckt und an der Vielzahl von Verstärkungsrahmenelementen (3) angebracht ist, wobei die Längsträgervorrichtung (4) so ausgelegt ist, dass sie Teil einer Plattenstruktur ist, die einen Laderaum hermetisch umschließt, sodass eine Ladung auf der Längsträgervorrichtung (4) innerhalb des Laderaums verschiebbar ist, und **dadurch gekennzeichnet, dass** jedes der Vielzahl von Verstärkungsrahmenelementen (3) einen Vorsprung (6) aufweist, der in einem Winkel von 90° mit einer Toleranz von 10° zur Längsrichtung (X) absteht, wobei die Längsträgervorrichtung (4) an den Vorsprüngen (6) der Vielzahl von Verstärkungsrahmenelementen (3) angebracht ist.

2. Stützstruktur (1) nach Anspruch 1, die ferner eine Scherplatte (5) zur Absorption einer in der Längsrichtung (X) verlaufenden Vektorkomponente der kinetischen Aufprallenergie umfasst, die zwischen zwei der Vielzahl von Rahmen (2) angeordnet und mit diesen verbunden ist.

3. Stützstruktur (1) nach Anspruch 1 oder 2, wobei die Längsträgervorrichtung (4) mittels einer Nietverbindung oder einer Schraubverbindung an der Vielzahl von Verstärkungsrahmenelementen (3) angebracht ist.

4. Stützstruktur (1) nach einem der vorhergehenden Ansprüche, wobei die Längsträgervorrichtung (4) so ausgelegt ist, dass sie eine Ladung verschiebbar trägt.

5. Stützstruktur (1) nach einem der vorhergehenden Ansprüche, wobei die Längsträgervorrichtung (4) mindestens zwei zueinander beabstandete Längsschienen (4a, 4b) zur geführten Handhabung einer Ladung umfasst.

6. Stützstruktur (1) nach einem der vorhergehenden Ansprüche, wobei die Vielzahl von Verstärkungsrahmenelementen (3) mittels einer Nietverbindung oder einer Schraubverbindung an der Vielzahl von Rahmen (2) angebracht ist.

7. Stützstruktur (1) nach einem der vorhergehenden Ansprüche, wobei die Form der Vielzahl von Verstärkungsrahmenelementen (3) zumindest teilweise einer Kontur eines Querschnitts der Vielzahl von Rahmen (2) entspricht.

8. Stützstruktur (1) nach einem der vorhergehenden Ansprüche, wobei die Vielzahl von Verstärkungsrahmenelementen (3) als Rahmenabdeckschicht ausgelegt ist, die die Vielzahl von Rahmen (2) abschnittsweise abdeckt.

9. Stützstruktur (1) nach einem der vorhergehenden Ansprüche, die ferner mindestens einen sich in der Längsrichtung (X) erstreckenden und an der Vielzahl von Rahmen (2) befestigten verstärkten Stringer (7) umfasst.

10. Stützstruktur (1) nach Anspruch 2 und 9, wobei der mindestens eine verstärkte Stringer (7) zur Abstützung der Scherplatte (5) zumindest abschnittsweise mit der Scherplatte (5) in Kontakt ist.

11. Flugzeug (10), das einen Flugzeugrumpf (11) mit einer Stützstruktur (1) nach einem der vorhergehenden Ansprüche umfasst.

12. Flugzeug (10) nach Anspruch 11, wobei die Vielzahl von Verstärkungsrahmenelementen (3) in einem Bilgenbereich des Flugzeugrumpfs (11) angeordnet ist.

## Revendications

1. Structure de support (1) pour absorber une énergie cinétique de collision, en particulier pour absorber une énergie cinétique de collision comportant un vecteur vitesse combiné affectant un fuselage d'un aéronef, la structure de support (1) comprenant :
une pluralité de cadres (2) qui s'étendent parallèlement les uns aux autres ;
une pluralité d'éléments de cadre de renforcement (3) montés au moins par sections sur chaque cadre de la pluralité de cadres (2) et configurés pour renforcer la pluralité de cadres (2) ; et
un dispositif de poutre longitudinale (4) destiné à absorber une composante de vecteur d'énergie cinétique de collision dans une direction longitudinale (X), le dispositif de poutre longitudinale (4) s'étendant dans la direction longitudinale (X) et présentant un angle compris entre 80° et 100° par rapport à la pluralité de cadres (2), et étant monté sur la pluralité d'éléments de cadre de renforcement (3), le dispositif de poutre longitudinale (4) étant configuré pour faire partie d'une structure en plaque qui enferme hermétiquement un compartiment de chargement de sorte qu'une cargaison peut coulisser sur le dispositif de poutre longitudinale (4) à l'intérieur du compartiment de chargement, et **caractérisé en ce que** chacun de la pluralité d'éléments de cadre de renforcement (3) présente une saillie (6) qui fait saillie avec un angle de 90° avec une tolérance de 10° par rapport à la direction longitudinale (X), le dispositif de poutre longitudinale (4) étant monté sur les saillies (6) de la pluralité d'éléments de cadre de renforcement (3).

2. Structure de support (1) selon la revendication 1, comprenant en outre une plaque de cisaillement (5) pour absorber une composante de vecteur d'énergie cinétique de collision dans la direction longitudinale (X) positionnée entre et reliée à deux de la pluralité de cadres (2).

3. Structure de support (1) selon la revendication 1 ou 2, le dispositif de poutre longitudinale (4) étant monté sur la pluralité d'éléments de cadre de renforcement (3) au moyen d'une liaison par rivet ou d'une liaison par boulon.

4. Structure de support (1) selon l'une des revendications précédentes, le dispositif de poutre longitudinale (4) étant configuré pour transporter de manière coulissante une cargaison.

5. Structure de support (1) selon l'une des revendications précédentes, le dispositif de poutre longitudinale (4) comprenant au moins deux rails longitudinaux (4a, 4b) espacés l'un de l'autre pour la manutention guidée d'une cargaison.

6. Structure de support (1) selon l'une des revendications précédentes, la pluralité d'éléments de cadre de renforcement (3) étant montés sur la pluralité de cadres (2) au moyen d'une liaison par rivet ou d'une liaison par boulon.

7. Structure de support (1) selon l'une des revendications précédentes, une forme de la pluralité d'éléments de cadre de renforcement (3) correspondant au moins partiellement à un contour d'une section transversale de la pluralité de cadres (2).

8. Structure de support (1) selon l'une des revendications précédentes, la pluralité d'éléments de cadre de renforcement (3) étant configurée comme une couche de recouvrement de cadre qui recouvre la pluralité de cadres (2) par sections.

9. Structure de support (1) selon l'une des revendications précédentes, comprenant en outre au moins un longeron renforcé (7) s'étendant dans la direction longitudinale (X) et fixé à la pluralité de cadres (2).

10. Structure de support (1) selon les revendications 2 et 9, l'au moins un longeron renforcé (7) étant en contact avec la plaque de cisaillement (5) au moins par sections pour supporter la plaque de cisaillement (5).

11. Aéronef (10) comprenant un fuselage d'aéronef (11) ayant une structure de support (1) selon l'une des revendications précédentes.

12. Aéronef (10) selon la revendication 11, la pluralité d'éléments de cadre de renforcement (3) étant positionnés dans une zone de cale du fuselage de l'aéronef (11).
